# EUROPÄISCHE PATENTANMELDUNG

(11) **EP 2 047 978 A2**
(43) Veröffentlichungstag der Anmeldung: **15.04.2009**
(21) Anmeldenummer: 08017804.9
(22) Anmeldetag: 10.10.2008
(51) Int. Cl.: B32B 7/02, B32B 5/32, B60K 15/03, B65D 81/38

(54) **Thermisch isolierender Behälter und Verfahren zur Herstellung eines thermisch isolierenden Behälters**

(30) Priorität: 12.10.2007 DE 202007018408 U; 15.04.2008 DE 102008019050
(71) Anmelder: Springfix Befestigungstechnik GmbH, 73084 Salach (DE)
(72) Erfinder: Ecker, Rainer, 73033 Goeppingen (DE); Roentgen, Andreas, 73730 Esslingen (DE); Roth, Michael, 97708 Bad Bocklet (DE)
(74) Vertreter: Naumann, Ulrich

(57) **Zusammenfassung**

Ein thermisch isolierender Behälter (1) zum Mitführen von Flüssigkeit (2) in einer mobilen Einrichtung, insbesondere in einem Fahrzeug, wobei der Behälter (1) eine die Flüssigkeit (2) allseitig umgebende Behälterwand (3) aufweist, zeichnet sich dadurch aus, dass die Behälterwand (3) zumindest zwei integral miteinander ausgeführte Schichten (6, 7, 8) aus dem gleichen Material umfasst, wobei die Schichten (6, 7, 8) eine unterschiedliche Dichte aufweisen. Ein Verfahren zur Herstellung eines thermisch isolierenden Behälters (1) ist dadurch gekennzeichnet, dass die Behälterwand (3) des Behälters (1) aus einem formbaren Material gebildet wird, wobei dem Material ein Treibmittel zugegeben wird, um beim Formvorgang ein gezieltes Aufschäumen des Materials zu erreichen.

## Beschreibung

Die Erfindung betrifft einen thermisch isolierenden Behälter zum Mitführen von Flüssigkeit in einer mobilen Einrichtung, insbesondere in einem Fahrzeug, wobei der Behälter eine die Flüssigkeit allseitig umgebende Behälterwand aufweist. Weiterhin betrifft die Erfindung ein Verfahren zur Herstellung eines thermisch isolierenden Behälters.

Behälter der in Rede stehenden Art sind seit Jahren aus der Praxis bekannt. Unterschiedlichste Flüssigkeiten, die bei der Benutzung oder beim Betrieb mobiler Einrichtungen jedweder Art wie bspw. Maschinen, Apparaten, Werkzeugen, Aggregaten oder dgl. benötigt werden, lassen sich damit in geeigneter Weise bereitstellen. Bekannte Behälter weisen zu diesem Zweck eine Behälterwand auf, welche die darin enthaltene Flüssigkeit allseitig umgibt.

Bei den bereitzustellenden Flüssigkeiten handelt es sich je nach Einsatzzweck zumeist um Betriebsstoffe für die mobile Einrichtung wie fossile oder erneuerbare Energieträger (Benzin, Diesel, Flüssiggas etc.) oder dergleichen und/oder um Hilfsstoffe wie bspw. Öl, Wasser, Säure, Lauge oder sonstige für den Betrieb der mobilen Einrichtung in Frage kommende Flüssigkeiten.

Insbesondere bei mobilen Einrichtungen, die mit Verbrennungskraftmaschinen (Kolbenmotoren, Strömungsmaschinen) ausgestattet sind oder die sonstige Flüssigkeit umsetzende oder fördernde Aggregate aufweisen, ist eine geeignete Bereitstellung von Flüssigkeit erforderlich, um den Betrieb zu gewährleisten. Zu nennen sind hier neben sämtlichen Arten von Land-, Luft- und Seefahrzeugen auch tragbare oder sonstwie bewegliche Einrichtungen wie Motorwerkzeuge (z.B. Motorsägen, Rasenmäher), Pumpen, Hilfsstromaggregate und dergleichen. Auch bei elektrochemisch arbeitenden Einrichtungen wie Akkumulatoren wird Flüssigkeit (Batteriesäure) zum Betrieb bereitgehalten.

Mobile Einrichtungen, insbesondere Fahrzeuge, führen zumeist eine Vielzahl von Flüssigkeiten wie Kraftstoff, Öl, Bremsflüssigkeit, Kühlwasser, Batteriesäure, Scheibenwasser etc. in dafür geeigneten Behältern an Bord des Fahrzeugs mit. Lediglich beispielhaft sei in diesem Zusammenhang auf die DE 42 19 516 A1 verwiesen, in welcher ein Kraftstofftank beschrieben ist.

Abhängig von den jeweiligen Einsatzbedingungen des Fahrzeugs, insbesondere der vorherrschenden Außentemperatur, und abhängig vom jeweiligen Gefrierpunkt der mitgeführten Flüssigkeit, tritt das Problem auf, dass die Flüssigkeit in dem Behälter gefriert und sich dann zumindest vorübergehend nicht mehr bestimmungsgemäß verwenden lässt. So kann ein in mitteleuropäischen Breiten nicht unüblicher Nachtfrost bereits dafür sorgen, dass das Scheibenwasser der Scheibenwaschanlage gefriert und somit deren ordnungsgemäßer Betrieb behindert oder unmöglich wird. Ähnliche Probleme ergeben sich beim Mitführen von Harnsäure, welche als Zusatzstoff dem Verbrennungsprozess moderner Dieselmotoren zugeführt wird, um Abgaswerte zu verbessern und den Verbrauch zu reduzieren. Die einzusetzende Harnsäure gefriert bereits bei Temperaturen um -11°C, was sich - im Unterschied zum Scheibenwasser - nicht durch Beimengung von Frostschutzmittel einfach ändern lässt.

Bei anderen Flüssigkeiten können sich bereits durch Abkühlen unter Normaltemperatur nachteilige Effekte wie Flockenbildung oder eine zunehmende Viskosität (insbesondere bei Öl) ergeben. Im Fall von Batteriesäure - beispielsweise in Starterbatterien für Verbrennungsmotoren - bewirkt ein Abkühlen der Säure einen deutlichen Leistungsverlust der Batterie. Ein Anlassen des Motors wird dadurch erschwert, oftmals vereitelt.

Um ganz allgemein ein Gefrieren oder sonstiges ungewolltes Abkühlen der Flüssigkeit im Behälter wirksam zu verhindern, kann diese aktiv beheizt werden. Dazu sind jedoch eine Heizeinrichtung mitsamt Steuerung sowie eine Energieversorgung notwendig, was als nachteilig anzusehen ist.

Alternativ kann das Abkühlen der Flüssigkeit zumindest vorübergehend dadurch verhindert werden, dass die Flüssigkeit in ausreichender thermischer Isolation gegenüber der (kühlen) Umgebung gelagert wird. Aus der Praxis bekannte Behälter weisen zu diesem Zweck bspw. Behälterwände auf, die aus mehreren Schalen bestehen, um im Zwischenraum zwischen den Schalen ein isolierendes Luftvolumen einzuschließen. Alternativ oder ergänzend werden die Behälterwände von thermischen Isolatoren wie Styropor umschalt, wodurch ein ähnlicher Effekt entsteht. Im Fall von Batterien kann mit Hilfe der erzielten thermischen Isolation sogar die beim Ladevorgang entstehende Wärme in vorteilhafter Weise über längere Zeit gespeichert werden.

Die aus der Praxis bekannten Bauweisen bringen jedoch den Nachteil mit sich, dass aufgrund vieler Einzelteile ein hoher Montageaufwand für den Behälter entsteht. Dabei werden für die mehrfachen Schalen jeweils geeignete Befestigungen benötigt, ferner entsteht auch für die Zuführungen zu dem Behälter sowie für Ein- bzw. Anbauteile des Behälters in der Regel ein erhöhter konstruktiver Aufwand. Weiterhin können sich durch die im Motorraum - bei Betrieb - vorhandenen starken mechanischen Schwingungen Einzelteile des Behälters (wie Schrauben, Verbindungselemente etc.) leicht lösen, was zu Klappergeräuschen oder sogar Beschädigungen führen kann. Auch sonstige Außeneinwirkungen wie hohe Temperaturen, Feuchtigkeit, Öl- bzw. Säurekontakt oder dgl. wirken sich nachteilig auf bekannte Behälter aus.

Herkömmliche Behälter, insbesondere zum Mitführen von Harnsäure, weisen zudem materialbedingt eine geringe Kälteschlagzähigkeit auf, wodurch bereits bei geringer mechanischer Einwirkung auf die Behälterwand Beschädigungen entstehen können. Die in der Praxis übliche Verwendung von Styropor als Isolator ist in diesem Zusammenhang ebenfalls als nachteilig anzusehen, da dieses leicht bricht oder reißt, wodurch Kältebrücken entstehen.

Der vorliegenden Erfindung liegt daher die Aufgabe zugrunde, einen Behälter der eingangs genannten Art derart auszugestalten und weiterzubilden, dass dieser durch verbesserte Konstruktion und Herstellbarkeit die Nachteile bekannter Behälter behebt und ein sicheres Mitführen der Flüssigkeit bei guter thermischer Isolation ermöglicht. Des Weiteren liegt der Erfindung die Aufgabe zugrunde, ein Verfahren zur Herstellung eines derartigen Behälters anzugeben.

Erfindungsgemäß werden die voranstehenden Aufgaben durch die Merkmale der nebengeordneten Patentansprüche 1 und 29 gelöst. Der erfindungsgemäße thermisch isolierende Behälter ist demnach dadurch gekennzeichnet, dass die Behälterwand zumindest zwei integral miteinander ausgeführte Schichten aus dem gleichen Material umfasst, wobei die Schichten eine unterschiedliche Dichte aufweisen.

Erfindungsgemäß ist dabei zunächst einmal erkannt worden, dass durch eine entsprechende Isolation des Behälters auf besonders einfache wie energiesparende Weise der flüssige Zustand des Behälterinhalts auch bei vorübergehend sehr niedrigen Außentemperaturen aufrechterhalten werden kann. Als günstig wurde erachtet, dass eine thermische Isolation neben dem Schutz der Flüssigkeit vor niedrigen Temperaturen auch Schutz vor hohen Temperaturen bietet. Ein ungewolltes Verdampfen oder eine ungewollte Entzündung der Flüssigkeit können durch thermische Isolation somit ebenfalls vermieden werden.

Zur Schaffung der Isolation ist erfindungsgemäß die Idee entwickelt worden, eine thermisch hoch isolierende, gleichzeitig konstruktiv einfache und stabile Behälterwand dadurch zu erhalten, dass diese aus einem Stück gleichen Materials besteht. Dafür ist eine vorteilhafte Umsetzung gefunden worden, wonach die Behälterwand zumindest zwei integral miteinander ausgeführte Schichten umfasst, die eine unterschiedliche Dichte aufweisen.

Der erfindungsgemäßen Lösung liegt die Erkenntnis zugrunde, dass ein und das gleiche Material - insbesondere durch entsprechende Verarbeitung - unter gleichen Umgebungsbedingungen lokal eine unterschiedliche Dichte aufweisen kann. Für die Konstruktion eines thermisch isolierenden Behälters wird dies erfindungsgemäß vorteilhaft genutzt. So verleiht eine Schicht mit relativ hoher Dichte der Behälterwand eine hohe Festigkeit und gewährleistet die zur sicheren Aufnahme der Flüssigkeit erforderliche Dichtheit. Eine Schicht verhältnismäßig hoher Dichte kann daher in vorteilhafter Weise im inneren Bereich der Behälterwand (d.h. dem der Flüssigkeit zugewandten Bereich der Behälterwand) und/oder im äußeren Bereich der Behälterwand (d.h. dem der Flüssigkeit abgewandten Bereich der Behälterwand) ausgebildet sein. Eine Schicht mit (relativ) geringerer Dichte weist dagegen den Vorteil eines geringeren spezifischen Gewichts und damit einer erhöhten thermischen Isolationsfähigkeit auf.

Durch die erfindungsgemäße Kombination von zumindest zwei Schichten unterschiedlicher Dichte in der Behälterwand entsteht demnach in vorteilhafter Weise ein Behälter, welcher der aufbewahrten Flüssigkeit eine gute thermische Dämmung gegenüber der Umgebung bietet, wobei gleichzeitig eine hohe Dichtheit und Stabilität des Behälters gewährleistet ist. Grundsätzlich ist eine kostengünstige einteilige Herstellung möglich, wobei eine aufwendige Montage zahlreicher Einzelteile entfällt und nachträgliches Ablösen oder störendes Klappern einzelner Bauteile nicht auftreten kann. Die eingangs genannte Aufgabe wird somit gelöst. Es sei nochmals angemerkt, dass sich die erfindungsgemäß geschaffene thermische Isolation nicht nur zum Schutz der Flüssigkeit gegenüber niedrigen, sondern auch gegenüber hohen Temperaturen günstig auswirken kann. So kann beispielsweise auch ein Verdampfen von Flüssigkeiten mit niedrigem Siedepunkt bei hohen Außentemperaturen vermieden werden.

Auf vorteilhafte Weise entsteht die unterschiedliche Dichte der Schichten dadurch, dass die Schichten der Behälterwand einen unterschiedlichen Schäumungsgrad des Materials aufweisen. Für sich gesehen ist bekannt, dass sich Materialien bspw. durch Zugabe von Treibmittel aufschäumen lassen, so dass im Material Poren vorliegen, mit denen die Dichte des Materials gegenüber dem ungeschäumten Zustand verringert ist. Je nach Schäumungsgrad, d.h. dem Anteil des Porenvolumens am Behälterwandvolumen, lassen sich lokal unterschiedliche Dichten erzielen.

Als geeigneter Werkstoff für die Behälterwand ist Kunststoff, vorzugsweise ein thermoplastischer Kunststoff wie Polypropylen (PP), Polyethylen (PE), Polyphenylensulfid (PPS) oder dergleichen anzusehen. Kunststoffe, insbesondere Thermoplaste, lassen sich im plastischen Zustand auf für sich gesehen bekannte Weise aufschäumen, weisen zudem bei guter mechanischer wie chemischer Beanspruchbarkeit ein geringes Gewicht auf, lassen sich in nahezu beliebige Form bringen und sind zumeist kostengünstig. In einer weiterhin vorteilhaften Ausführungsform wird als Material ein Verschnitt aus Polypropylen und Ethylen-Propylen-Dien-Kautschuk (EPDM) verwendet, um eine gute Elastizität des Behälters in einem großen Temperaturbereich zu gewährleisten, was die Bruchgefahr im Betrieb reduziert.

In konstruktiver Hinsicht ist es denkbar, dass die Schäumungsgrade aneinander grenzender Schichten fließend ineinander übergehen. So kann bspw. eine als Vollmaterial ausgeführte Schicht (Schäumungsgrad 0%) in einem Grenzbereich fließend in eine benachbarte Schicht mit hohem Schäumungsgrad (bspw. 50%) übergehen. Im Grenzbereich zwischen den Schichten liegen demnach zwischen beispielsweise 0% und 50% liegende Schäumungsgrade vor. Abhängig vom Herstellverfahren ist es alternativ denkbar, dass sich die Schäumungsgrade aneinander grenzender Schichten sprunghaft ändern. Ein Grenzbereich, in welchem Schäumungsgrade vorliegen, die zwischen denen der aneinander grenzenden Schichten liegen, existiert dann praktisch nicht.

In einer vorteilhaften Weiterbildung der Erfindung besteht eine äußere Schicht des Behälters aus Vollmaterial. Die so erzeugte porenfreie äußere Schicht stellt auf vorteilhafte Weise eine geschlossene "Außenhaut" des Behälters dar, wodurch eine äußere Abdichtung der Behälterwand gewährleistet ist. Ergänzend oder alternativ kann eine innere Schicht des Behälters aus Vollmaterial bestehen, welche dann im Sinne einer "Innenhaut" die Dichtheit des Behälterinnenraums gewährleistet.

Eine besonders vorteilhafte Gestaltung des Behälters ergibt sich, wenn die Behälterwand drei (oder mehr) integral miteinander ausgeführte Schichten umfasst. Dabei können zumindest zwei der Schichten eine unterschiedliche Dichte aufweisen. Bei Bildung von drei Schichten entsteht eine dreiteilige Struktur der Behälterwand, wobei sich durch eine entsprechende Wahl der Schichtdicken sowie der Schichtdichten verschiedene wesentliche Eigenschaften des Behälters (Isolationswirkung, Festigkeit, Gewicht, Außen-/Innenvolumen etc.) beeinflussen lassen. Eine kostengünstige Herstellung des Behälters ergibt sich, wenn sämtliche Schichten aus dem gleichen Material bestehen. Alternativ ist es denkbar, dass zumindest eine der Schichten aus einem anderen Material hergestellt ist. Letztere Herstellung im 2-Komponenten-Verfahren bietet bei geeigneter Werkstoffwahl den Vorteil, dass beispielsweise die thermische Isolation der Behälterwand abermals erhöht werden kann oder ein geringes Gesamtgewicht erzielbar ist.

In einer vorteilhaften Weiterbildung der Erfindung weist eine zwischen der inneren Schicht und der äußeren Schicht liegende mittlere Schicht eine geringere Dichte als die benachbarten Schichten auf. Die Behälterwand erhält durch diese Maßnahme eine sandwichartige Struktur, wobei der zwischen äußerer Schicht ("Außenhaut") und innerer Schicht ("Innenhaut") liegenden mittleren Schicht ("Schaumseele") im Wesentlichen eine thermische Isolationsfunktion zukommt, während die Außen- und Innenhaut vor allem zur Abdichtung und Steifigkeit des Behälters beitragen. Wie bereits angemerkt, können die innere Schicht und/oder die äußere Schicht dazu aus Vollmaterial bestehen, wobei im Sinne der Gewichtsreduzierung die Vollmaterialschichten erheblich dünner als die (mittlere) Schaumschicht ausgeführt sind.

Unabhängig von der konkreten Anzahl und Anordnung der Schichten lässt sich abhängig vom jeweiligen Einsatzzweck die thermische Isolationswirkung des Behälters durch unterschiedliche Maßnahmen beeinflussen. Wie bereits erläutert, wirkt sich ein hoher Schäumungsgrad positiv auf die thermische Isolationswirkung aus. Daneben lässt sich die Isolationswirkung des Behälters durch die Schichtdicke beeinflussen. Insbesondere durch eine stark schaumhaltige, dicke Schicht wird ein hoher thermischer Schutz des Behälterinhalts gewährleistet.

Aus fertigungstechnischer Sicht lässt sich der Behälter besonders einfach herstellen, wenn die Dicke der Schichten über die Fläche der Behälterwand weitestgehend konstant ist. Dabei entsteht eine entlang des Flächenverlaufs der Behälterwand in etwa gleichbleibende thermische Isolation.

Alternativ ist es denkbar, die Schichtdicken über die Fläche der Behälterwand zu variieren, um auf diese Weise eine örtlich unterschiedliche thermische Isolationsfähigkeit des Behälters zu schaffen. So könnte durch eine an die jeweiligen Anforderungen angepasste Schaumdickenausbildung ein bestimmter Bereich des Behälters in besonderer Weise thermisch geschützt sein, um bspw. besondere Bauteile oder Funktionselemente, wie bspw. eine Pumpe, Ventile, Ein-/oder Auslassöffnungen, Messeinrichtungen oder dgl. besonders vor Extremtemperaturen zu schützen. Die örtlich angepasste Dicke kann insbesondere zusammen mit der Geometrie des Behälters als Gestaltungsmaßnahme zur Steuerung des Einfrierverhaltens der im Behälter befindlichen Flüssigkeit genutzt werden. So ist es denkbar, das Zentrum des "Einfrierendes" in einen unkritischen Bereich des Behälters zu legen, um dort eine "Soll-Gefrierstelle" zu schaffen, an welcher der durch die erstarrende Flüssigkeit entstehende Gefrierdruck gefahrlos von der Behälterwand aufgenommen werden kann.

Auf vorteilhafte Weise zeichnet sich der Behälter durch eine mehrteilige, vorzugsweise zweiteilige Ausführung der Behälterwand aus. Die Herstellbarkeit und Montierbarkeit des Behälters sind dadurch begünstigt, insbesondere wird eine Fertigung der Behälterwand im Spritzgussverfahren begünstigt. Die Behälterwand könnte - bei zweiteiliger Ausführung - bspw. eine Oberschale und eine Unterschale umfassen, die zusammen den Behälter bilden. Die Teile der Behälterwand sind dann miteinander verbunden, vorzugsweise miteinander verschweißt, um die nötige Dichtheit des Behälters zu gewährleisten. Alternativ oder ergänzend könnten die Teile der Behälterwand miteinander verklebt oder form- und/oder kraftschlüssig miteinander verbunden sein. Als Schweißverfahren zur Verbindung der Wandteile bieten sich bspw. Spiegelschweißen, Heißschweißen mit Zusatzdraht oder Umspritzschweißen an, wobei Letzteres den Vorteil bietet, dass der Behälter unmittelbar nach Herstellung auf Dichtheit geprüft werden kann. Ganz allgemein kann bei mehrteiliger Ausführung der Behälterwand eine anforderungsgerechte Wanddicke der Wandteile realisiert werden. Für die Nutzung im Kraftfahrzeug ist bspw. denkbar, ein unteres Teil der Behälterwand deutlich dicker als ein oberes Teil der Behälterwand auszuführen, um die Gefahr mechanischer Beschädigungen von unten (beispielsweise durch Steinschlag, Aufsetzen am Untergrund, Eis etc.) zu verringern.

Zur Bereitstellung der Flüssigkeit für die mobile Einrichtung bzw. zum Nachfüllen von Flüssigkeit in den Behälter ist es zweckmäßig, dass an diesem zum Befüllen und/oder Ablassen der Flüssigkeit ein entsprechender Einlauf und/oder Auslauf vorgesehen ist. Zur Schaffung eines derartigen Ein- oder Auslaufs kann die Behälterwand in geeigneter Weise zu einer Mündung, einem Trichter oder dgl. geformt sein oder können Löcher in die Behälterwand gebohrt oder in sonstiger Weise darin ausgebildet sein. Der Ein- bzw. Auslauf kann verschließbar ausgeführt sein, wobei zur Steuerung des Flüssigkeitsdurchgangs Ventile zum Einsatz kommen können. Im Sinne einer thermisch günstigen Behältergestaltung kann es weiterhin zweckmäßig sein, dass der Einlauf und/oder Auslauf an einer thermisch besonders geschützten Stelle des Behälters (1) angeordnet ist. Durch diese Maßnahme kann gewährleistet werden, dass der zum Betrieb des Behälters nötige Zu- bzw. Ablauf trotz niedriger Temperaturen so lange wie möglich ungefroren bleibt. Unter thermischen Aspekten wird der Einlauf und/oder Auslauf demnach nicht unbedingt an der - zumeist starker Kälte ausgesetzten - Behälterbodenwand, sondern an der Stelle des letzten Einfrierens angeordnet sein.

In einer vorteilhaften Weiterbildung des Behälters sind zum Befüllen, Entleeren, Belüften des Behälters und/oder zu sonstigen Zwecken benötigte Anschlüsse als Anbauteile an den Behälter ausgeführt. Durch Ausführung der Anschlüsse als Anbauteile lässt sich der Behälter im Vormontagezustand leichter transportieren. Die benötigten, oftmals sperrigen Anschlüsse werden dann zweckmäßiger Weise erst kurz vor dem Verbau des Behälters an der mobilen Einrichtung mit dem Behälter verbunden. Die Anbauteile können aus dem gleichen Material wie oder einem festeren Material als dem des Behälters gefertigt werden. Zur Verbindung der Anbauteile können Bajonett-, Gewinde-, Schnapp- oder sonstige Verschlüsse zum Einsatz kommen. Entsprechende Dichtungen (bspw. Lippendichtung oder Runddichtung) verhindern ein Eintreten von Schmutz bzw. ein Austreten der mitgeführten Flüssigkeit.

Eine sichere Installation des Behälters in der mobilen Einrichtung kann realisiert werden, indem an der Behälterwand, vorzugsweise an deren Außenseite, Mittel zur Befestigung des Behälters an der mobilen Einrichtung vorgesehen sind. Diese können jegliche Art von Befestigungselementen umfassen, die zur dauerhaften und/oder lösbaren Befestigung des Behälters dienen, bspw. Laschen, Vorsprünge, Vertiefungen, Löcher, Wölbungen, Nuten und dergleichen, welche sich ggf. mit weiteren Befestigungselementen kombinieren lassen. Es können ferner Befestigungsmittel vorgesehen sein, die sich zum Anschluss von Anbauteilen, Leitungen und/oder weiteren Behältern nutzen lassen.

Besonders bevorzugtes Befestigungsmittel bei geringen Punktkräften sind beispielsweise aus dem Patent DE 197 260 41 C2 bekannte Befestigungsklammern, die eine Feinzentrierung, geringe Einsteckkräfte, große Auflageflächen, seitlichen Spielausgleich und federnde Vorspannung nach dem Ausrichten und Anschrauben aufweisen. Diese können durch höherfeste Mittel (beispielsweise Blechmuttern) unterstützt werden, wobei hierdurch vor allem eine Festlagerung realisiert wird. Zur Ermöglichung einer geringfügigen Verschiebung des Behälters bei Wärmedehnung ist weiterhin eine Aufhängung an seitlich flexiblen Aufhängungen bzw. Biegeplatten im Sinne eines Loslagers denkbar. Die Aufhängung kann aus dem Behältermaterial gebildet sein, an den Befestigungsstellen der mobilen Einrichtung angeschraubt oder mit für sich gesehen bekannten Clipfüßen in ein Rund- oder Langloch an der mobilen Einrichtung, beispielsweise am Fahrzeugboden, eingesteckt werden. Falls erforderlich können für hohe Punktkräfte Verstärkungen und/oder Abstandshalter in den Behälter integriert sein, wozu sich Umspritzen oder Nachmontieren eignet. Ganz allgemein können die Befestigungsmittel beliebig am Behälter angreifen. Bei zweiteiliger Ausführung der Behälterwand greifen die Befestigungsmittel jedoch bevorzugt an einem unteren Behälterabschnitt, beispielsweise an der Unterschale an, um die ggf. vorhandene Schweißnaht zu entlasten.

Alternativ oder ergänzend können an der Innenseite der Behälterwand Mittel zur Befestigung von Funktionselementen vorgesehen sein. Dabei kann es sich prinzipiell um ähnliche Mittel wie an der Außenseite handeln, wobei je nach mitgeführter Flüssigkeit auf eine Korrosionsbeständigkeit der Mittel zu achten ist. Bei den innerhalb des Behälters anzuordnenden Funktionselementen kann es sich bspw. um eine Pumpe, um Messeinrichtungen (Flüssigkeitsstandmesser, Thermometer, Säuremesser, etc.), um Ventile, Leitungen, Schwallwände oder dergleichen handeln. Es sei angemerkt, dass sich eine dauerhafte Befestigung derartiger Funktionselemente auch durch Integration in die Behälterwand - bspw. durch Umspritzen mit Wandmaterial - erzielen ließe, wodurch eine besonders dauerhafte Befestigung gewährleistet ist.

Sofern die mobile Einrichtung im Betrieb Beschleunigungen ausgesetzt ist, wie dies unter anderem bei einem Fahrzeug der Fall ist, kann es von Vorteil sein, dass im Innenraum des Behälters zumindest eine Schwallwand angeordnet ist. Eine Schwallwand dient insbesondere dazu, störende Bewegungen (Hin- und Herschwappen) der Flüssigkeit aufgrund Beschleunigung des Behälters zu reduzieren. Insbesondere bei großen Behältervolumina kann durch Schwappen der Flüssigkeit hoher Druck auf die Behälterwände ausgeübt werden, sowie können störende Geräusche entstehen, was sich durch Anordnung einer Schwallwand wirksam abschwächen lässt. Im Behälterinnenraum können zusätzliche oder integral mit der Schwallwand ausgeführte Versteifungen vorgesehen sein, die zur Stabilität und Steifigkeit des Behälters beitragen. In vorteilhafter Weise sind zum Einsatz kommende Schwallwände bzw. Versteifungen derart gestaltet, dass diese einen im Behälter entstehenden Gefrierdruck, welcher sich insbesondere zum Einfrierzentrum hin aufbauen kann, problemlos aufnehmen können.

Eine weitere Maßnahme zur Hemmung von Flüssigkeitsbewegungen innerhalb des Behälters liegt darin, den Innenraum des Behälters mit einem offenporigen Schaum zu versehen. Bei offenporigem Schaum sind dessen Poren derartig miteinander verbunden, dass ein leichtes Eindringen von Flüssigkeit in die Schaumstruktur möglicht ist, wobei die Flüssigkeit durch die Porenstruktur jedoch erheblich in der Bewegung gehindert wird. Eine Füllung des Innenraums mit offenporigem Schaum, welcher die Flüssigkeit schwammartig aufnimmt, trägt zudem zur Geräuschminimierung bei.

Zweckmäßigerweise ist die äußere Geometrie des Behälters den jeweiligen räumlichen Bedingungen der mobilen Einrichtung angepasst. Beispielsweise im Motorraum von Fahrzeugen bietet sich für den Behälter oft nur ein unregelmäßiger, zerklüfteter Bauraum, was eine entsprechende äußere Geometrie des Behälters nötig macht, um ein ausreichendes Flüssigkeitsvolumen bereitstellen zu können. Im Hinblick auf die thermische Isolationsfähigkeit weist eine Zerklüftung des Behälters den jedoch Nachteil auf, dass sich die Oberfläche des Behälters hierdurch erheblich vergrößert, wodurch der zu verhindernde äußere Temperatureinfluss gesteigert ist. Während die Kugel aufgrund der kleinsten Oberfläche bezogen auf das Volumen in thermischer Hinsicht die ideale Behälterform bezüglich der thermischen Isolation darstellt, ergeben sich durch jede Abweichung von dieser Körperform Verschlechterungen hinsichtlich der Isolationswirkung.

Bei einer bauraumbedingten starken Zerklüftung des Behälters kann es daher vorteilhaft sein, dass sich das Behältervolumen über einen gut isolierten Kernbereich und mindestens einen weniger gut isolierten Ergänzungsbereich erstreckt. Eine derartige Ausbildung des Behälters mit örtlich unterschiedlicher Isolation ließe sich durch die - bereits zuvor erwähnte - unterschiedliche Ausprägung der Schichtdicken und/oder der Schäumungsgrade (und damit der Schichtdichten) erzielen. Ein in besonderer Weise thermisch zu schützender Kernbereich, in dem bspw. wichtige Funktionselemente des Behälters angeordnet sind, kann dazu derartig isoliert sein, dass dieser erst nach Gefrieren sämtlicher schwächer isolierten Bereiche des Behälters zu gefrieren beginnt. Die weniger gut isolierten Ergänzungsbereiche des Behälters sind dann aus Gründen der Material-, Gewichts- und Kosteneinsparung mit verhältnismäßig dünner Behälterwand ausgeführt, wobei vorrangiges Ziel der Gestaltung der Ergänzungsbereiche darin liegt, Rest-Räume gut auszunutzen. Die in dem Ergänzungsbereich bzw. den ggf. mehreren Ergänzungsbereichen befindliche Flüssigkeit dient dann allenfalls aufgrund deren eigener Wärmekapazität als Einfrierverzögerer.

In besonders vorteilhafter Weise trägt auch die geometrische Gestaltung der Behälterbereiche dazu bei, die thermische Isolation des Kernbereichs zu erhöhen. Dazu kann beispielsweise die Anordnung von Behälterbereichen so gewählt sein, dass die Wärmekapazität der im Ergänzungsbereich befindlichen Flüssigkeit zur Verzögerung der Abkühlung des Kernbereichs genutzt wird.

Selbstverständlich ist es denkbar, dass zwischen dem Kernbereich und dem oder den Ergänzungsbereichen Schwallwände und/oder Schottwände vorgesehen sind, die einen Bewegungsaustausch bzw. Wärmeaustausch zwischen Kern- und Ergänzungsbereich behindern.

Bei Erstreckung des Behältervolumens auf einen Kernbereich und einen bzw. mehrere Ergänzungsbereiche, ist es denkbar, diese jeweils als eigene Gefäße auszuführen, die vorzugsweise über eine Öffnung, eine Leitung oder dgl. miteinander verbunden sind. Ventile können zwischengeschaltet sein, um den Flüssigkeitslauf zu steuern. Durch die Ausführung von Kernbereich und Ergänzungsbereich als eigene, d.h. grundsätzlich unabhängig voneinander befüllbare Gefäße, kann bspw. gezielt ein Nachlaufen kalter Flüssigkeit aus dem Ergänzungsbereich in den Kernbereich vermieden werden, wodurch eine besondere thermische Entkopplung erzielt wird.

In einer weiterhin vorteilhaften Ausgestaltung der Erfindung ist der Behälter innerhalb eines oder mehrerer weiterer (thermisch isolierender) Behälter angeordnet. Durch das Ineinanderanordnen ist die in einem innen liegenden Behälter befindliche Flüssigkeit nicht nur durch die eigene Behälterwand gegenüber der äußeren Umgebung isoliert, sondern auch durch den Inhalt und die Wand des umgebenden Behälters. Somit lässt sich in vorteilhafter Weise eine weitere Erhöhung der thermischen Isolation erzielen, wobei eine Kombination mit sämtlichen bereits genannten Gestaltungsmaßnahmen denkbar ist. Die ineinander angeordneten Behälter können über ausreichend isolierte Leitungen, Durchgänge oder dergleichen miteinander verbunden sein, um einen Flüssigkeitsstrom von einem äußeren Behälter in einen inneren Behälter zu ermöglichen. Neben erhöhtem thermischem Schutz bietet eine derartige (zwiebelartige) Ineinanderschachtelung der Behälter zusätzlichen mechanischen Schutz empfindlicher innen liegender Funktionselemente. Gleichzeitig ist eine integrierte Bauform realisiert. Eine geeignete Ausführung der Behälterwände kann zweckmäßig sein, um ggf. entstehenden Gefrierdruck - oder sonstige Krafteinwirkung - abzufangen.

Im Fall der Anordnung des Behälters in einem oder mehreren anderen kann eine abermalige Erhöhung des thermischen Schutzes weiterhin erzielt werden, indem der Behälter nahe dem Einfrierzentrum des umgebenden Behälters angeordnet wird.

Unabhängig von der sonstigen Ausführung sind in einer Weiterbildung des Behälters zumindest Segmente der Behälterwand membranartig gestaltet. Dadurch ist ein zusätzlicher Schutz des Behälters vor ggf. entstehendem Druck auf die Behälterwand - von innen oder von außen - erzielt, indem die membranartigen Segmente dem Druck zumindest in gewissem Maß nachgeben und sich elastisch verformen. In einer möglichen Weiterbildung könnten Bereiche der Behälterwand, insbesondere deren innere Schicht und/oder deren äußere Schicht gewellt ausgebildet sein, wodurch trotz relativ hoher Steifigkeit des Materials gewisse Längenänderungen unter Krafteinfluss - bspw. Gefrierdruck beim Einfrieren des Tankinhalts - möglich sind, ohne dass die Behälterwand beschädigt wird.

Ganz allgemein sei darauf hingewiesen, dass die bisher beschriebene passive Temperaturhaltung (Abkühlverzögerung bzw. Aufheizverzögerung) durch Ausnutzen der Wärmekapazität des Flüssigkeitsvolumens mittels thermischer Dämmung selbstverständlich auch durch aktives Beheizen bzw. aktives Kühlen ergänzt werden kann. Dies kann zweckmäßig sein, wenn extreme Außentemperaturen über einen längeren Zeitraum vorherrschen, so dass auch durch thermische Isolation ein Gefrieren (bzw. Verdampfen, ggf. Entzünden) nicht verhindert werden kann. Hierzu können in der Behälterwand, in Zuleitungen, Öffnungen, Ventilen oder sonstigen Funktionselementen Heizelemente (bzw. Kühlelemente) vorgesehen sein, die insbesondere bei längerfristiger Temperatureinwirkung zum Einsatz kommen.

Bei dem erfindungsgemäßen Verfahren, mit welchem sich der erfindungsgemäße thermisch isolierende Behälter herstellen lässt, wird für die Ausbildung der Behälterwand ein formbares Material gewählt, wobei sich - wie bereits erwähnt - insbesondere Kunststoffe, darunter thermoplastische Kunststoffe wie Polypropylen, Polyethylen, Polyphenylensulfid oder dgl. eignen. Beim Formvorgang, durch welchen das formbare Material zur Behälterwand geformt wird, wird dem Material ein Treibmittel zugegeben, um ein gezieltes Aufschäumen des Materials zu erreichen. Erfindungsgemäß erfolgt das Aufschäumen des Materials gezielt, d.h. örtlich unterschiedlich, wodurch das Material der Behälterwand mehrere integral miteinander ausgeführte Schichten ausbilden kann, die aufgrund des unterschiedlichen Schäumungsgrads eine unterschiedliche Dichte aufweisen.

In vorteilhafter Weise lässt sich durch Wahl bestimmter Materialparameter (Mischungsverhältnis von formbarem Material und Treibmittel, Beigabe von Zusätzen, etc.) und/oder sonstiger Prozessparameter (Art der Formgebung, Druck, Temperatur, Temperaturverlauf, Dauer, Feuchtigkeit, etc.) gezielt auf die Dicke und/oder die Dichte der einzelnen auszubildenden Schichten Einfluss nehmen. Als besonderer Vorteil des Verfahrens ist anzusehen, dass sich der Behälter bei entsprechender Gestaltung in weitestgehend einem Arbeitsschritt erstellen lässt.

Die Formgebung des Materials der Behälterwand erfolgt in vorteilhafter Weise durch Guss, insbesondere Spritzguss, oder durch Blasformen. Mit Materialien aus der Polypropylengruppe (reines Polypropylen oder Polypropylenverschnitt mit Ethylen-Propylen-Dien-Kautschuk in unterschiedlichen Mischungsverhältnissen) können Behälterwände mit geschäumter mittlerer Schicht ("Schaumseele") und mit dünnen, geschlossenen (porenfreien) Randbereichen ("Außen- bzw. Innenhaut") von wenigen Millimetern (beispielsweise 0,5mm bis 2mm) erzeugt werden. Die Dicke der Randschichten aus Vollmaterial kann durch Prozessparameter hinreichend beeinflusst werden. Verschiedene Behälterwanddicken von beispielsweise 2 mm (praktisch noch porenfrei) bis 30 mm lassen sich problemlos realisieren.

Erfolgt die Formgebung des Materials durch Spritzguss, so ist eine hohe Formfreiheit bei der Behältergestaltung gewährleistet, ferner lassen sich hohe Stückzahlen auf kostengünstige Weise fertigen. Der Spritzguss kann dabei abhängig von der Geometrie des Behälters über einen Anspritzpunkt erfolgen, kann jedoch bei Bedarf über mehrere Anspritzpunkte (zur optimalen Füllung der Behälterwände) erfolgen, wozu die Anspritzpunkte bspw. in Kaskade geschaltet sein können. Die Herstellung des Behälters kann ebenso im 2K-Verfahren erfolgen, wodurch sich die Dicke der Randschichten besser steuern lässt. Alternativ zum Spritzguss bietet sich für die Herstellung des Behälters das Blasformen an. Blasformen bietet gegenüber dem Spritzgießen den Vorteil, dass sich in begrenztem Ausmaß auch Hinterschnitte realisieren lassen.

In einer vorteilhaften Ausgestaltung des Verfahrens wird das bei der Formgebung verwendete Werkzeug, insbesondere das Spritzgusswerkzeug, mit verschiedenen Temperaturniveaus betrieben. Auf diese Weise lässt sich ein guter Kompromiss zwischen Wandqualität und Herstellzeit erzielen. Abhängig vom verwendeten Material kann das Variationsfenster bis zu 200° C (bspw. bei Polyamiden) betragen. Ganz allgemein erfolgt dabei das Einspritzen des Materials zunächst in ein heißes Werkzeug, welches anschließend im Wandbereich abgekühlt wird, um die Zykluszeit im wirtschaftlichen Rahmen zu halten. In einer vorteilhaften Weiterbildung des Verfahrens wird das Werkzeug nach Einspritzen des Materials um in etwa 20° C bis 80° C abgekühlt.

Zur Reduzierung der Verfahrensdauer kann es zweckmäßig sein, den Spritzling nach kurzer Zeit vom Spritzgusswerkzeug in ein Kühlwerkzeug umzusetzen. Ein weiteres Erstarren des Materials ist so möglich, während das Spritzgusswerkzeug bereits für den nächsten Spritzling verwendet werden kann. Ganz allgemein weist das Werkzeug, in welchem das Material erstarrt (dies kann das Spritzgusswerkzeug selbst oder eben ein zusätzliches Kühlwerkzeug sein), vorzugsweise eine Form auf, die eine weitere Ausdehnung, insbesondere ein Nachschäumen des Materials während des Abkühlvorgangs ermöglicht. Das Werkzeug, insbesondere Kühlwerkzeug, kann dazu allseitig einen Spalt gegenüber dem Vorspritzling (bspw. 1 bis 10 mm oder noch deutlich größer, abhängig von herzustellendem Behälter und örtlichen Anforderungen) aufweisen. Der Spritzling bläht sich aufgrund der Ausdehnungsmöglichkeit im Werkzeug durch den Gasdruck des Treibmittels weiter auf ("schäumt nach"), bspw. bis eine innere Schicht ("Innenhaut") und/oder eine äußere Schicht ("Außenhaut") zur Anlage an den Wänden des Werkzeugs gelangt. Durch den Kontakt mit dem Werkzeug kann eine intensive Kühlung einsetzen, bis auch die schaumige mittlere Schicht ("Schaumseele") kalt und fest ist. Durch dieses "Nachschäumen" lässt sich die Verfahrensdauer nochmals reduzieren. Des Weiteren bewirkt das Nachschäumen eine nachträgliche Dichtereduktion der Behälterwand nach Einbringen des Materials in das Werkzeug.

Zweckmäßiger Weise umfasst das zum Einsatz kommende Werkzeug voneinander getrennte Werkzeugteile, vorzugsweise zwei Werkzeughälften. Eine derartige Ausführung ermöglicht zunächst ein einfaches Befüllen und Entleeren des Werkzeugs, weiterhin entsteht der Vorteil, dass sich die Größe des für den Spritzling vorgesehenen Hohlraums anpassen lässt.

Zur Erzielung einer hohen Dichtereduktion beim Abkühlprozess ist es dementsprechend denkbar, nach Einbringen des Materials die Schließkraft zwischen den Werkzeugteilen erheblich zu reduzieren, um eine Ausdehnung des Materials zu ermöglichen. Der Expansionsprozess des Spritzlings wird durch ein derartig "atmendes" Werkzeug vorteilhaft unterstützt, wodurch sich eine hohe Dichtereduktion aufgrund starken Aufschäumens des Materials ergibt.

Zur Verkürzung der Herstellzeit könnte ein erstes, vorzugsweise stationäres Werkzeugteil eine Materialzuführeinrichtung aufweisen und ein zweites Werkzeugteil als verfahrbare Aufnahme für die Behälterwand ausgebildet sein. In diesem Fall könnte der zwischen dem ersten und zweiten Werkzeugteil durch Einspritzen des Materials erzeute Spritzling nach dem Spritzvorgang auf dem als verfahrebare Aufnahme ausgebildeten zweiten Werkzeugteil verbleiben, wodurch sich der Herstellvorgang vorteilhaft rationalisieren lässt. Der auf dem zweiten Werkzeugteil befindliche Spritzling wird dann nach Abschluss des Spritzvorgangs vom ersten Werkzeugteil entfernt, so dass während des Abkühlvorgangs bereits ein nächster Spritzvorgang mit dem ersten Werkzeugteil stattfinden kann.

Prinzipiell können die Werkzeugteile beliebig ausgeformt sein, abhängig von der gewünschten Behälterform. Vorteilhafter Weise ist vorgesehen, dass die Behälterwand mit deren innerer Seite an dem zweiten Werkzeugteil anliegt. Hierdurch ergibt sich der Effekt, dass nach Wegbewegen des zweiten Werkzeugteils die Außenhaut des Spritzlings ungehindert nachschäumen kann, wobei die Innenhaut auf dem (unnachgiebigen) zweiten Werkzeugteil (Kern) verbleibt. Die Innenhaut der Behälterwand erhält dann kühlenden Kontakt, so dass kein Risiko einer Störung der geschlossenen Innenhaut besteht, wodurch die Dichtheit des Behälters gewährleistet ist. Durch Verwendung mehrerer zweiter Werkzeugteile lässt sich die Auslastung des ersten Werkzeugteils - und damit die Ausbringungsleistung - erhöhen.

In einer vorteilhaften Weiterbildung des Verfahrens wird das beim Gießen, insbesondere Spritzgießen, oder beim Blasformen erstarrte Material nachträglich zumindest teilweise aufgeheizt. So könnten bspw. im Spritzgusswerkzeug zu weit erstarrte Bereiche der Behälterwand bspw. im Kühlwerkzeug gezielt aufgeheizt werden, um der beim Nachschäumvorgang einsetzenden Verformung besser folgen zu können. Ein derartiges Nachheizen könnte zweckmäßig sein für Wandbereiche, die beim Nachschäumen größere Dehnungen erfahren; dies sind insbesondere bei einer mehrteilig ausgeführten Behälterwand die Ränder, an denen die Behälterwandteile aneinandergeschweißt werden.

Alternativ oder ergänzend ist es denkbar, dass zur weiteren Formgebung der Behälterwand deren äußere Schicht ("Außenhaut") und/oder deren innere Schicht ("Innenhaut") mittels einer Zieheinrichtung vorzugsweise in Aufschäumrichtung gezogen wird. Derartiges Ziehen kann das zuvor erwähnte Anschmelzen bei Bedarf ersetzen, falls dieses örtlich nicht gewünscht ist.

Weiterhin ist es denkbar, die äußere Schicht ("Außenhaut") und/oder innere Schicht ("Innenhaut") zumindest bereichsweise gewellt auszuformen. Die durch Aufschäumen und/oder Nachschäumen des Materials verursachten Formänderungen werden damit geringst möglich behindert, da Längenanpassungen in gewissem Umfang möglich sind. Ungewolltes Reißen beim Schäumvorgang kann so wirksam verhindert werden.

Zur weiteren Verbesserung des Schäumgrads kann in dem bei der Formgebung verwendeten Werkzeugs nach Einbringen des Materials ein Unterdruck, insbesondere Vakuum erzeugt werden.

Der Schäumgrad lässt sich weiterhin verbessern, indem ein zusätzliches Treibmedium dem noch formbaren Material zugeführt wird. Auf diese Weise ließe sich der Schäumdruck des "inneren Treibmittels" unterstützen, wobei die Zufuhr ggf. eine örtliche Zerstörung der vorhandenen Schaumstruktur auslöst und eine ausgesuchte Lage der Zuführstelle bedingt, notfalls ein nachträgliches Entfernen des geschädigten Bereiches.

In vorteilhafter Weise werden zur Erzielung eines örtlich unterschiedlichen Aufschäumens des Materials verschiedene Treibmittel und/oder Treibmedien miteinander kombiniert. Dies kann insbesondere für komplexe Behältergeometrien zweckmäßig sein, weiterhin können ganz nach Bedarf gezielte gewichtsmindernde, schäumend wirkende, verteilende und/oder aktivierende Effekte ausgelöst werden.

Eine weiterhin vorteilhafte Weiterbildung des Verfahrens sieht vor, dass die Behälterwand in geeigneten Bereichen mittels Gasinnendruck hohlgeblasen wird, wobei insbesondere die mittlere Schicht ("Schaumseele") bereichsweise vollständig entfernt wird. Hierzu kann eine entsprechende Lage und Abstimmung der Einblasstellen vorgesehen sein. Weiterhin ist es denkbar, mit zusätzlichem Schäummittel hohlzublasen, wodurch stehenbleibende Stege aufschäumen und hohle Wandbereiche hohl bleiben, da diese durch ausreichend schnelle Kühlung bereits fest sind. Durch das Ausblasen der Schaumseele wird ein leichtes Nachschäumen von Außenhaut und Innenhaut erreicht, ohne dass diese überall miteinander in Berührung geraten und verschweißen. Es entstehen große Hohlräume im Kern der Behälterwand, die für eine hohe Gewichtsersparnis sorgen, dennoch ist die Verletzungtiefe der Außenhaut deutlich höher als bei nicht geschäumter Außenhaut (z. B. bei Gasinnendruck ohne Treibmittel).

Zur weiteren Erhöhung der Festigkeit des Behälters ist es weiterhin denkbar, nach dem Ausblasen des flüssigen Kerns der Behälterwand den Gasinnendruck wegzunehmen, wodurch das Treibmittel das nach innen liegende, noch schäumfähige Material auseinander und aufeinander zu drückt, bis zur gegenseitigen Berührung und Verschmelzung. Zur Unterstützung des Vorgangs kann das Material der Behälterwand gezielt aufgeheizt werden, bspw. durch heißes Gas oder eine exotherme Temperaturzunahme beim Schäumen, hervorgerufen durch das Triebmittel oder einen weiteren Hilfsstoff.

Eine weitere Beschleunigung des Herstellverfahrens lässt sich erzielen, wenn dem Treibmittel ein endotherm wirkender Stoff beigefügt wird. Durch diese Maßnahme kann die Abkühlzeit auch bei dicken Behälterwänden durch die Temperaturabsenkung im Schaum verkürzt werden, ohne dass der aufgrund der gezielt schlechten Wärmeleitung geringe Wärmetransport abgewartet werden muss.

Je nach Bedarf kann es zweckmäßig sein, dass nach Erzeugung der Behälterwand der Innenraum des Behälters zumindest weitestgehend mit einem offenporigen Schaum gefüllt wird. Für diese Maßnahme ist ein zusätzlicher Spritzprozess notwendig, wobei für den offenporigen Schaum - abhängig vom Einsatzzweck - ein anderes Material als für die Behälterwand gewählt werden kann.

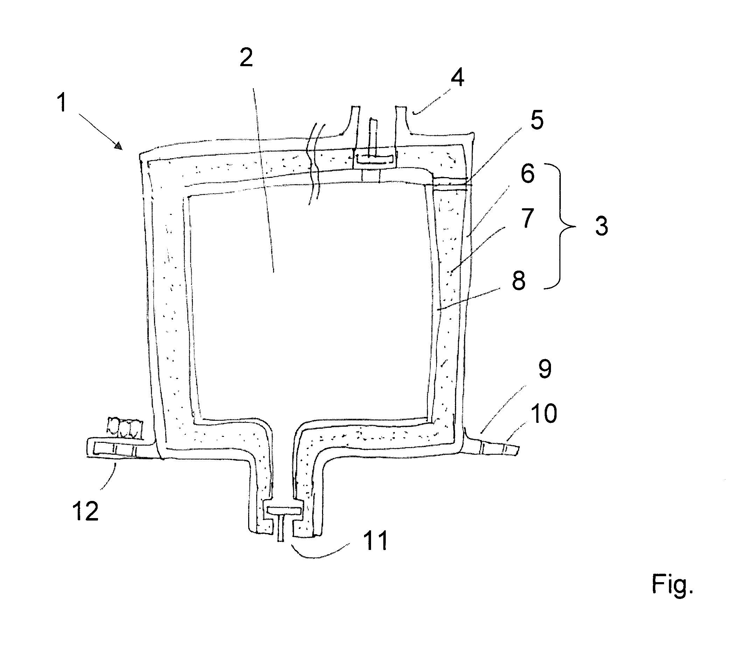

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 sowie die dem Patentanspruch 21 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

In der Zeichnung zeigt
- die einzige Fig.: eine schematische Ansicht eines erfindungsgemäßen Behälters, der mit dem erfindungsgemäßen Verfahren hergestellt worden ist.

In der einzigen Fig. ist ein thermisch isolierender Behälter 1 schematisch dargestellt, mit welchem sich Flüssigkeit 2 in einer - nicht dargestellten - mobilen Einrichtung wie bspw. einem Kraftfahrzeug mitführen lässt. Der Behälter 1 umfasst eine die Flüssigkeit 2 allseitig umgebende Behälterwand 3 und lässt sich mittels Befestigungslaschen 9 befestigen, die von der Behälterwand 3 auf beiden Seiten im unteren Bereich des Behälters 1 abragen. In den Befestigungslaschen 9 sind metallische Verstärkungen 10 vorgesehen. Wie auf der linken Seite des Behälters 1 zu sehen, kann eine metallische Verstärkung integral mit der Befestigungsmutter 12 ausgeführt sein.

Im dargestellten Ausführungsbeispiel umfasst die Behälterwand 3 drei integral miteinander ausgeführte Schichten 6, 7, 8, die aus Kunststoff, bspw. Polypropylen (PP), spritzgegossen sind. Dabei bestehen die äußere Schicht 6 und die innere Schicht 8 der Behälterwand 3 aus Vollmaterial, wodurch sich jeweils eine porenfreie, flüssigkeitsundurchlässige Oberfläche an der Innenseite ("Innenhaut") und der Außenseite ("Außenhaut") des Behälters 1 ergibt. Zwischen den Schichten 6 und 8 liegt die mittlere Schicht 7, die integral mit den benachbarten Schichten 6 und 8 ausgeführt ist und aus dem gleichen Material besteht, jedoch eine deutlich geringere Dichte als die Schichten 6 und 8 aufweist. Die geringere Dichte der mittleren Schicht 7 ("Schaumseele") resultiert aus einer Aufschäumung des Materials in diesem mittleren Bereich der Behälterwand 3, wodurch die Behälterwand 3 - aufgrund der Gaseinschlüsse in der mittleren Schicht 7 - hervorragende Isoliereigenschaften aufweist.

Als wesentlicher Vorteil des Behälters 1 ist zu nennen, dass dieser - aufgrund des mehrschichtigen Aufbaus der Behälterwand 3 - einteilig herstellen lässt, wobei wegen der unterschiedlichen Eigenschaften der Schichten eine hohe thermische Isolationsfähigkeit bei ausreichender Dichtheit und Festigkeit des Behälters erreicht wird. Aufgrund der einschaligen Fertigung des Behälters 1 entfällt eine aufwändige Montage und Befestigung von einzelnen Schalenteilen, wird die Entstehung von Scheuer- oder Klappergeräuschen durch sich bewegende Einzelteile vermieden und wird ferner eine Gewichtsersparnis erzielt.

In der Behälterwand 3 des Behälters 1 ist im oberen rechten Bereich ein Einlauf 4 bzw. im unteren linken Bereich ein Auslauf (nicht bezeichnet) vorgesehen, wobei insbesondere am Auslauf die Behälterwand 3 zu einer Mündung geformt ist. Der Auslaufbereich ist daher thermisch stark isoliert, wodurch bei vorübergehend niedrigen Außentemperaturen ein Gefrieren der Flüssigkeit in diesem Bereich zumindest stark verzögert wird. Das im Auslauf befindliche Ventil 11 wird in ähnlicher Weise thermisch geschützt, um dessen Beweglichkeit auch bei niedrigen Außentemperaturen aufrechtzuerhalten.

Im oberen rechten Bereich der Darstellung ist eine Schweißnaht 5 angedeutet, welche die Möglichkeit aufzeigt, dass der Behälter 1 bspw. zweiteilig (mit einem oberen Deckel) ausgeführt werden kann, wodurch es möglich ist, nach Herstellung der Behälterwand 3 Schwallwände (nicht dargestellt) in den Behälter 1 einzufügen.

Alternativ ist eine einteilige Herstellung des Behälters 1 möglich, wie sie im linken oberen Teil der Fig. angedeutet ist (dort ist keine Schweißnaht 5 zu sehen). Im Fall einer einteiligen Ausführung ist eine nachträgliche Montage von Schwallwänden nicht mehr möglich, stattdessen könnte ein offenporiger Schaum in den Füllraum des Behälters eingespritzt werden, um Flüssigkeitsbewegungen innerhalb des Behälters 1 zu bremsen.

Je nach Einsatzzweck kann ein geeignetes Behältervolumen gewählt werden, wobei sich für die Verwendung im Kraftfahrzeugbau Behältergrößen von in etwa 2 bis 20 Liter eignen. Die hier gezeigte eckige Behälterform ist rein darstellungsbedingt, bevorzugt werden aus thermischer Sicht runde, insbesondere kugelförmige oder kugelähnliche Außenformen. Gleichwohl können beliebige Anpassungen der Form an den zur Verfügung stehenden Baumraum erfolgen.

Hinsichtlich weiterer vorteilhafter Ausgestaltungen der erfindungsgemäßen Vorrichtung sowie des erfindungsgemäßen Verfahrens wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel des erfindungsgemäßen Behälters lediglich zur Erörterung der beanspruchten Lehre dient, diese jedoch nicht auf das Ausführungsbeispiel einschränkt.

### Bezugszeichenliste

- 1: Behälter
- 2: Flüssigkeit
- 3: Behälterwand
- 4: Einlauf
- 5: Schweißnaht
- 6: äußere Schicht
- 7: mittlere Schicht
- 8: innere Schicht
- 9: Befestigungslasche
- 10: metallische Verstärkung
- 11: Ventil
- 12: Befestigungsmutter

## Patentansprüche

1. Thermisch isolierender Behälter (1) zum Mitführen von Flüssigkeit (2) in einer mobilen Einrichtung, insbesondere in einem Fahrzeug, wobei der Behälter (1) eine die Flüssigkeit (2) allseitig umgebende Behälterwand (3) aufweist,
**dadurch gekennzeichnet, dass** die Behälterwand (3) zumindest zwei integral miteinander ausgeführte Schichten (6, 7, 8) aus dem gleichen Material umfasst, wobei die Schichten (6, 7, 8) eine unterschiedliche Dichte aufweisen,
wobei die unterschiedliche Dichte der Schichten (6, 7, 8) vorzugsweise aus einem unterschiedlichen Schäumungsgrad des Materials resultiert,
wobei die Behälterwand (3) aus Kunststoff, vorzugsweise einem thermoplastischen Kunststoff wie Polypropylen, Polyethylen, Polyphenylensulfid oder dergleichen, hergestellt sein kann.

2. Behälter (1) nach Anspruch 1, **dadurch gekennzeichnet, dass** die Schäumungsgrade aneinandergrenzender Schichten (6, 7, 8) fließend ineinander übergehen
oder sich sprunghaft ändern.

3. Behälter (1) nach Anspruch 1 oder 2, **dadurch gekennzeichnet, dass** eine äußere Schicht (6) und/oder eine innere Schicht (8) des Behälters (1) aus Vollmaterial besteht/bestehen,
und/oder dass die Behälterwand (3) drei integral miteinander ausgeführte Schichten (6, 7, 8) umfasst.

4. Behälter (1) nach einem der Ansprüche 1 bis 3, **dadurch gekennzeichnet, dass** sämtliche Schichten (6, 7, 8) aus dem gleichen Material bestehen
oder dass zumindest eine der Schichten aus einem anderen Material als die übrigen Schichten besteht
und/oder dass eine zwischen der inneren Schicht (8) und der äußeren Schicht (6) liegende mittlere Schicht (7) eine geringere Dichte als die benachbarten Schichten (6, 8) aufweist.

5. Behälter (1) nach einem der Ansprüche 1 bis 4, **dadurch gekennzeichnet, dass** die Dicke der Schichten (6, 7, 8) über die Fläche der Behälterwand (3) weitestgehend konstant ist
oder dass zur Gewährleistung örtlich unterschiedlicher thermischer Isolationsfähigkeit des Behälters (1) die Dicke der Schichten (6, 7, 8) über die Fläche der Behälterwand (3) unterschiedlich ist
und/oder dass eine mehrteilige, vorzugsweise zweiteilige Ausführung der Behälterwand (3) realisiert sein kann, wobei die Teile der Behälterwand (3) miteinander verbunden, vorzugsweise miteinander verschweißt sind.

6. Behälter (1) nach einem der Ansprüche 1 bis 5, **dadurch gekennzeichnet, dass** zum Befüllen und/oder Ablassen der Flüssigkeit (2) ein entsprechender Einlauf (4) und/oder Auslauf vorgesehen ist,
wobei der Einlauf (4) und/oder Auslauf an einer thermisch besonders geschützten Stelle des Behälters (1) angeordnet ist.

7. Behälter (1) nach einem der Ansprüche 1 bis 6, **dadurch gekennzeichnet, dass** zum Befüllen, Entleeren, Belüften des Behälters (1) und/oder zu sonstigen Zwecken benötigte Anschlüsse als Anbauteile an den Behälter (1) ausgeführt sind und/oder dass an der Behälterwand (3), vorzugsweise an deren Außenseite, Befestigungsmittel (9, 10) vorgesehen sind
und/oder dass an der Behälterwand (3), vorzugsweise an deren Innenseite, Mittel zur Befestigung von Funktionselementen vorgesehen sind.

8. Behälter (1) nach einem der Ansprüche 1 bis 7, **dadurch gekennzeichnet, dass** im Innenraum des Behälters (1) zumindest eine Schwallwand angeordnet ist
und/oder dass der Innenraum des Behälters (1) mit einem offenporigen Schaum versehen ist
und/oder dass sich das Behältervolumen über einen gut isolierten Kernbereich und mindestens einen weniger gut isolierten Ergänzungsbereich erstreckt,
wobei die thermische Isolierung des Kernbereichs durch eine geeignete geometrische Gestaltung der Behälterbereiche erhöht sein kann
und/oder dass der Kernbereich und der Ergänzungsbereich bzw. die Ergänzungsbereiche als eigene Gefäße ausgeführt sind, die vorzugsweise über eine Öffnung, eine Leitung oder dergleichen miteinander verbunden sind.

9. Behälter (1) nach einem der Ansprüche 1 bis 8, **dadurch gekennzeichnet, dass** dieser innerhalb eines oder mehrerer weiterer Behälter angeordnet ist,
wobei dieser vorzugsweise in der Nähe des Einfrierzentrums des umgebenden Behälters angeordnet sein kann.

10. Behälter (1) nach einem der Ansprüche 1 bis 9, **dadurch gekennzeichnet, dass** zumindest Segmente der Behälterwand (3) membranartig gestaltet sind und/oder dass es sich bei der Flüssigkeit (2) um einen Betriebs- oder Hilfsstoff für die mobile Einrichtung handelt.

11. Verfahren zur Herstellung eines thermisch isolierenden Behälters, insbesondere eines Behälters (1) nach einem der Ansprüche 1 bis 10, **dadurch gekennzeichnet, dass** die Behälterwand (3) aus einem formbaren Material gebildet wird, wobei dem Material ein Treibmittel zugegeben wird, um beim Formvorgang ein gezieltes Aufschäumen des Materials zu erreichen,
wobei die Dicke und/oder die Dichte der Schichten (6, 7, 8) des Materials durch Wahl bestimmter Materialparameter und/oder sonstiger Prozessparameter bestimmt werden kann
und/oder dass die Formgebung des Materials der Behälterwand (3) durch Guss, insbesondere Spritzguss, oder durch Blasformen erreicht wird.

12. Verfahren nach Anspruch 11, **dadurch gekennzeichnet, dass** das bei der Formgebung verwendete Werkzeug, insbesondere Spritzgusswerkzeug, mit verschiedenen Temperaturniveaus betrieben wird,
wobei das Werkzeug nach Einspritzen des Materials um in etwa 20°C bis 80°C abgekühlt wird
und/oder wobei das Werkzeug eine Form aufweist, die eine weitere Ausdehnung, insbesondere ein Nachschäumen des Materials während des Abkühlvorgangs ermöglicht.

13. Verfahren nach Anspruch 11 oder 12, **dadurch gekennzeichnet, dass** das Werkzeug voneinander getrennte Werkzeugteile, vorzugsweise zwei Werkzeughälften, umfasst,
wobei nach Einbringen des Materials die Schließkraft zwischen den Werkzeugteilen erheblich reduziert wird, um die Ausdehnung des Materials zu ermöglichen
und/oder wobei ein erstes, vorzugsweise stationäres Werkzeugteil eine Materialzuführeinrichtung aufweist und ein zweites Werkzeugteil als verfahrbare Aufnahme für die Behälterwand (3) ausgebildet ist
und wobei die Behälterwand (3) mit deren innerer Seite an dem zweiten Werkzeugteil anliegen kann.

14. Verfahren nach einem der Ansprüche 11 bis 13, **dadurch gekennzeichnet, dass** das beim Gießen, insbesondere Spritzgießen, oder beim Blasformen erstarrte Material nachträglich zumindest teilweise aufgeheizt wird
und/oder dass zur weiteren Formgebung der Behälterwand (3) deren äußere Schicht (6) (Außenhaut) und/oder innere Schicht (8) (Innenhaut) mittels einer Zieheinrichtung vorzugsweise in Aufschäumrichtung gezogen wird
und/oder dass die äußere Schicht (6) (Außenhaut) und/oder innere Schicht (8) (Innenhaut) zumindest bereichsweise gewellt ausgeformt wird,
wobei in dem bei der Formgebung verwendeten Werkzeug nach Einbringen des Materials ein Unterdruck, insbesondere Vakuum erzeugt werden kann,
wobei ein zusätzliches Treibmedium in das noch formbare Material zugeleitet werden kann
und wobei zur Erzielung einer örtlich unterschiedlichen Aufschäumung des Materials verschiedene Treibmittel und/oder Treibmedien kombiniert werden.

15. Verfahren nach einem der Ansprüche 11 bis 14, **dadurch gekennzeichnet, dass** die Behälterwand (3) in geeigneten Bereichen mittels Gasinnendruck hohlgeblasen wird, wobei insbesondere die mittlere Schicht (7) (Schaumseele) bereichsweise vollständig entfernt wird,
wobei nach dem Ausblasen des flüssigen Kerns der Behälterwand (3) der Gasinnendruck weggenommen und das verbleibende Material vorzugsweise aufgeheizt wird, um eine gegenseitige Berührung und Verschmelzung des verbleibenden Materials zu bewirken
und/oder wobei in dem Treibmittel ein endotherm wirkender Stoff enthalten sein kann
und/oder wobei nach Erzeugung der Behälterwand (3) der Innenraum des Behälters (1) zumindest weitestgehend mit einem offenporigen Schaum gefüllt wird.
